# EUROPEAN PATENT APPLICATION

(11) **EP 2 495 983 A1**
(43) Date of publication of application: **05.09.2012**
(21) Application number: 10835773.2
(22) Date of filing: 14.10.2010
(51) Int. Cl.: H04N 13/04, G02B 27/22, G02F 1/13, G03B 35/16, G09G 5/00, G09G 5/36

(54) **IMAGE DISPLAY DEVICE, VISUAL AID, AND THREE-DIMENSIONAL IMAGE DISPLAY SYSTEM USING THOSE**

(30) Priority: 11.12.2009 JP 2009281556
(71) Applicant: Sharp Kabushiki Kaisha, Osaka-shi, Osaka 545-8522 (JP)
(72) Inventor: MORISHITA Tadao, Osaka 545-8522 (JP)
(74) Representative: Goddar, Heinz J.
(86) International application number: PCT/JP2010/068063
(87) International publication number: WO 2011/070851

(57) **Abstract**

An image display device where the display mode can be appropriately switched depending on whether a vision aid is in contact with or close to a portion of a user's body is provided. An image display device (1) includes a display unit (11) that performs display in the stereo image display mode for displaying, separately in time or space, a left eye image to be viewed through a left eye portion (21L) of a vision aid (2) and a right eye image to be viewed through a right eye portion (21R) of the vision aid (2), or a planar image display mode for displaying one of the left eye image and the right eye image. The image display device (1) receives, from the vision aid (2), a mounting signal (241) that indicates that the vision aid is in contact with or close to a portion of the user's body and switches the display mode of the display unit (11) between the stereo image display mode and the planar image display mode based on the reception condition of the signal.

## Description

### TECHNICAL FIELD

The present invention relates to an image display device, a vision aid and a stereo image display system using the same, and more particularly, an image display device, a vision aid and a stereo image display system using the same employing glasses methods, in which a user wears special glasses to view stereo images.

### BACKGROUND ART

In recent years, increasingly active research and development have been conducted toward the end of putting into practical use a stereo image display system that allows the viewer to view stereoscopic images.

Conventional stereo image display systems are generally categorized into: (1) stereo image display systems using so-called glasses methods, in which an image display device displays left and right eye images with a parallax and the viewer wears special glasses (i.e. a vision aid) that allow him to view only left eye images with his left eye and only right eye images with his right eye; and (2) so-called glasses-free stereo image display systems that allow the viewer to view stereo images without special glasses.

JP-Hei9(1997)-96779A discloses a wireless stereoscopic-viewing liquid crystal shutter glasses where the mode can be adjusted in accordance with use conditions of the liquid crystal shutter glasses. The liquid crystal shutter glasses can be controlled such that the power source for opening and closing the liquid crystal shutters is turned off when the glasses frame is flipped over toward the top of the face while the head band is mounted on the head and is not detached; the monitor screen of the stereo video playback equipment is automatically switched between stereo image playback and planar image playback (JP-Hei9(1997)-96779A, paragraph 0012).

### DISCLOSURE OF THE INVENTION

In the conventional arrangement disclosed in JP-Hei9(1997)-96779A, the screen is switched from stereo image playback to planar image playback when the shutters of the liquid crystal shutter glasses are flipped over. However, in the first place, the user does not need liquid crystal shutter glasses when viewing planar images, and thus does not need to wear the glasses on his head; consequently, his most natural action would be to take the liquid crystal shutter glasses off his head. However, in the conventional arrangement above, the screen may not be switched to the planar image mode when the user takes the shutter glasses off his head without flipping over the liquid crystal shutters, and stereo images may continue to be displayed.

An object of the present invention is to provide an image display device where the display mode of the display unit can be appropriately switched between a stereo image display mode and a planar image display mode depending on whether the vision aid is in contact with or close to a portion of the user's body.

An image display device according to the present invention includes: a display unit that performs display in a stereo image display mode for displaying, separately in time or space, a left eye image to be viewed through a left eye portion of a vision aid and a right eye image to be viewed through a right eye portion of the vision aid, or a planar image display mode for displaying one of the left eye image and the right eye image. The image display device further includes: a mounting signal receiver that receives, from the vision aid, a mounting signal that indicates that the vision aid is in contact with or close to a portion of a user's body; and a switching unit that switches a display mode of the display unit between the stereo image display mode and the planar image display mode based on a reception condition of the mounting signal at the mounting signal receiver.

According to the present invention, the display mode of the display unit may be appropriately switched between the stereo image display mode and the planar image display mode depending on whether or not the vision aid is in contact with or close to a portion of the user's body.

### BRIEF DESCRIPTION THE DRAWINGS

[FIG. 1] Fig. 1 is a schematic view of an entire stereo image display system according to a first embodiment.
[FIG. 2] FIG. 2 is a block diagram of part of the functional configuration of the image display device shown in FIG. 1.
[FIG. 3] FIG. 3 is a block diagram of part of the functional configuration of the vision aid shown in FIG. 1.
[FIG. 4] FIG. 4 is a block diagram of another part of the functional configuration of the vision aid shown in FIG. 1.
[FIG. 5] FIG. 5 is a schematic view of a left liquid crystal shutter shown in FIG. 1.
[FIG. 6] FIG. 6 is a flowchart illustrating operations of the vision aid according to the first embodiment.
[FIG. 7] FIG. 7 is a flowchart illustrating operations of the image display device according to the first embodiment.
[FIG. 8] FIG. 8 is a flowchart illustrating operations of the vision aid according to the first embodiment.
[FIG. 9] FIG. 9 is a schematic view of an entire stereo image display system according to a second embodiment.
[FIG. 10] FIG. 10 is a block diagram of part of the functional configuration of the image display device shown in FIG. 9.
[FIG. 11] FIG. 11 is a flowchart illustrating operations of the image display device according to the second embodiment.

### EMBODIMENTS FOR CARRYING OUT THE INVENTION

An image display device according to an embodiment of the present invention includes: a display unit that performs display in a stereo image display mode for displaying, separately in time or space, a left eye image to be viewed through a left eye portion of a vision aid and a right eye image to be viewed through a right eye portion of the vision aid, or a planar image display mode for displaying one of the left eye image and the right eye image. The image display device further includes: a mounting signal receiver that receives, from a vision aid, a mounting signal that indicates that the vision aid is in contact with or close to a portion of a user's body; and a switching unit that switches a display mode of the display unit between the stereo image display mode and the planar image display mode based on a reception condition of the mounting signal at the mounting signal receiver.

The above arrangement allows the image display device of the present embodiment to switch the display mode between a stereo image display mode and a planar image display mode based on the reception condition of a mounting signal from the vision aid. A mounting signal indicates that the vision aid is in contact with or close to a portion of the user's body. Thus, it is possible to provide an image display device that can appropriately switch its display mode between the stereo image display mode and the planar image display mode based on whether or not the user wears a vision aid in contact with or close to a portion of his body.

More preferably, the above image display device further includes a measuring unit that determines, if the mounting signal receiver receives a mounting signal from a plurality of vision aids, a mounting condition of each of the plurality of vision aids at a user based on the received mounting signal. Further, the switching unit switches the display mode of the display unit between the stereo image display mode and the planar image display mode based on the mounting condition determined by the measuring unit.

According to this preferred arrangement, the measuring unit determines the mounting condition of each of a plurality of vision aids at a user based on the received mounting signal from the plurality of vision aids. Then, the switching unit switches the display mode based on the mounting condition determined by the measuring unit. Thus, if a plurality of vision aids are present, the display mode may be switched based on the mounting condition of each of the vision aids.

Further, in the preferred arrangement above, it is preferable that the measuring unit stores a number of the plurality of vision aids in advance. In addition, it is preferable that the measuring unit determines, as the mounting condition, a number of vision aids considered to be mounted on a user out of the plurality of vision aids, and the switching unit switches the display mode of the display unit to the stereo image display mode if the number determined by the measuring unit is identical with the number stored at the measuring unit.

According to this preferred arrangement, the stereo image display mode may be entered if all the vision aids are considered to be mounted on the user and the planar image display mode may be entered if at least one vision aid is considered to be not mounted on the user.

Alternatively, the measuring unit may determine, as the mounting condition, a number of vision aids considered to be mounted on a user out of the plurality of vision aids, and the switching unit may switch the display mode of the display unit to the stereo image display mode if the number determined by the measuring unit is not less than 1. In this arrangement, display is performed in the stereo image display mode if at least one of the plurality of vision aids is considered to be mounted on a user.

Further, to achieve the above object, a stereo image display system according to the present invention includes: a vision aid that allows a left eye image to be viewed through a left eye portion and a right eye image to be viewed through a right eye portion independently from each other; and an image display device that performs display in a stereo image display mode for displaying, separately in time or space, the left eye image and the right eye image, or a planar image display mode for displaying one of the left eye image and the right eye image. In this stereo image display system, the vision aid includes: a mounting detector that determines that the vision aid is in contact with or close to a portion of a user's body; a mounting signal generator that generates, based on the determination by the mounting detector, a mounting signal that indicates that the vision aid is in contact with or close to a portion of the user's body; and a transmitter that transmits the mounting signal to the image display device. Further, the image display device includes: a display unit that performs display in one of the stereo image display mode and the planar image display mode; a mounting signal receiver that receives the mounting signal from the transmitter; and a switching unit that switches a display mode of the display unit between the stereo image display mode and the planar image display mode based on a reception condition of the mounting signal at the mounting signal receiver.

In the stereo image display system of the above arrangement, the switching unit of the image display device may switch the display mode of the display unit between the stereo image display mode and the planar image display mode based on the reception condition of a mounting signal from the vision aid. A mounting signal may indicate that the vision aid is in contact with or close to a portion of the user's body. Thus, a stereo image display system may be provided where the display mode is switched appropriately between the stereo image display mode and the planar image display mode as the user wears the vision aid in contact with or close to a portion of his body.

Preferably, the stereo image display system includes a plurality of vision aids. Further, it is preferable that the image display device further includes a measuring unit that determines, if the mounting signal receiver receives a mounting signal from the plurality of vision aids, a mounting condition at a user of the plurality of vision aids based on the received mounting signal, and the switching unit switches the display mode of the display unit between the stereo image display mode and the planar image display mode based on the mounting condition determined by the measuring unit.

In this preferred arrangement, a measuring unit may determine a mounting condition at a user of a plurality of vision aids based on the received mounting signal from the vision aids. Then, the switching unit may switch the display mode based on the mounting condition determined by the measuring unit. Thus, if a plurality of vision aids are present, the display mode may be switched based on the mounting condition of each of the vision aids.

Further, in this preferred arrangement, the measuring unit may store a number of the plurality of vision aids in advance, and the measuring unit may determine, as the mounting condition, a number of vision aids considered to be mounted on a user out of the plurality of vision aids, and the switching unit may switch the display mode of the display unit to the stereo image display mode if the number determined by the measuring unit is equal to the number stored by the measuring unit.

In this arrangement, the stereo image display mode may be entered if all the vision aids are considered to be mounted on a user, and the planar image display mode may be entered if at least one vision aid is considered to be not mounted on a user.

Alternatively, the measuring unit may determine, as the mounting condition, a number of vision aids considered to be mounted on a user out of the plurality of vision aids, and the switching unit may switch the display mode of the display unit to the stereo image display mode if the number determined by the measuring unit is not less than 1. In this arrangement, display is performed in the stereo image display mode if at least one of the vision aids is considered to be mounted on a user.

It should be noted that, in the stereo image display system of the present embodiment, the mounting detector may be a push switch, for example.

To achieve the above object, a vision aid according to an embodiment of the present invention is a vision aid that allows a left eye image to be viewed through a left eye portion and a right eye image to be viewed through a right eye portion independently from each other, including: a mounting detector that determines that the vision aid is in contact with or close to a portion of a user's body; and a mounting signal generator that generates a mounting signal that indicates that the vision aid is in contact with or close to a portion of the user's body in accordance with the determination by the mounting detector. The vision aid further includes: a transmitter that transmits the mounting signal to an image display device that performs display in one of a stereo image display mode and a planar image display mode, the stereo image display mode being for displaying, separately in time or space, the left eye image to be viewed through the left eye portion of the vision aid and the right eye image to be viewed through the right eye portion of the vision aid, and the planar image display mode being for displaying one of the left eye image and the right eye image.

### Embodiments

Now, embodiments of the present invention will be described in more detail with reference to the drawings. The identical and corresponding portions in the drawings are labeled with the same numerals and their description will not be repeated.

### First Embodiment

### Configuration of Stereo Image Display System

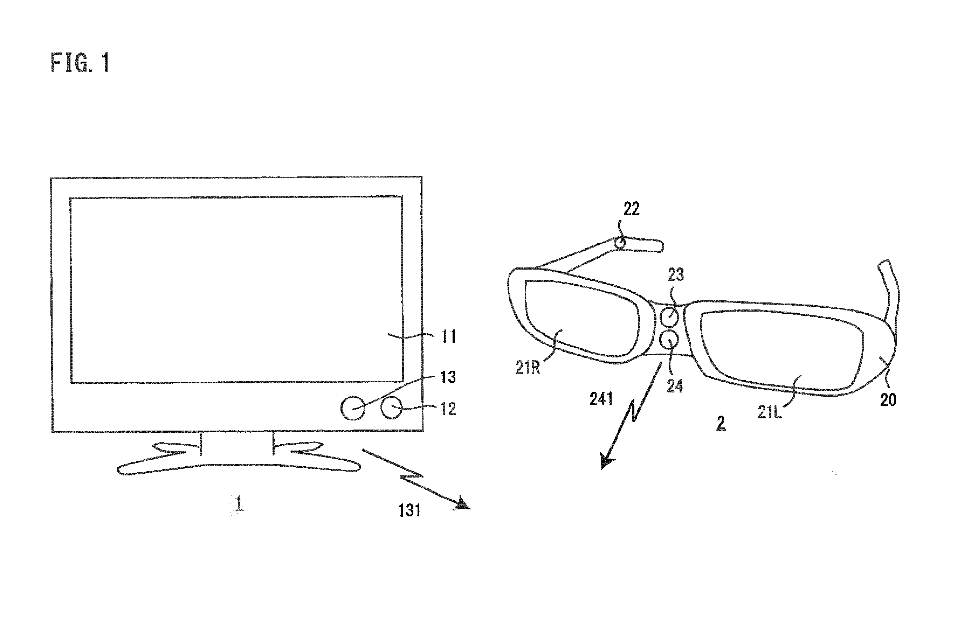

First, referring to FIG. 1, the configuration of a stereo image display system will be described. The stereo image display system shown in FIG. 1 includes an image display device 1 and a vision aid 2.

In the present implementation, the image display device 1 is a liquid crystal display; however, any light-emitting display or non-light-emitting display may be used. Examples of light-emitting displays include, but are not limited to, a cathode-ray tube, a plasma display, an organic electroluminescent device, an inorganic electroluminescent device, and a field-emission display. Examples of non-light-emitting displays include, but are not limited to, a liquid crystal display, as mentioned above, as well as a rear projector. The image display device 1 includes a display unit 11, a detection signal receiver 12 and a shutter controller 13.

The display unit 11 is implemented by a liquid crystal panel. The display unit 11 performs display in either a stereo image display mode or a planar image display mode. In the stereo image display mode, a left eye image to be viewed through a left eye portion of the vision aid 2 and a right eye image to be viewed through a right eye portion of the vision aid 2 are displayed separately in time or space. Left and right eye images are generated so that they have a parallax that would be produced when a user viewed one object with his left and right eyes. Through the vision aid 2, the user views only a left eye image with his left eye and only a right eye image with his right eye to recognize these images as one stereo image. In the planar image display mode, the display unit 11 displays either a left eye image or a right eye image.

The mounting signal receiver 12 receives a mounting signal 241 sent from the vision aid 2. The mounting signal receiver 12 may be installed in any location on the image display device 1 where it can receive a mounting signal 241 sent from a transmitter 24 of the vision aid 2. The mounting signal receiver 12 is located in the bottom-right portion of the display unit 11 in the present implementation.

The shutter controller 13 sends a control signal 131 to the vision aid 2. The shutter controller 13 may be installed in any location on the image display device 1 where it can send a control signal 131 to the control signal receiver 23 of the vision aid 2. The shutter controller 13 is located in the bottom-right portion of the display unit 11 in the present implementation.

The vision aid 2 includes a frame 20, a left liquid crystal shutter 21L, a right liquid crystal shutter 21R, a mounting detector 22, a control signal receiver 23 and a transmitter 24. The vision aid 2 may be in any form, including a goggle, a hat or helmet, a head-mounted device, or opera glasses. In the present implementation, the vision aid 2 is in the form of glasses that can be mounted on the nose and ears. In the present implementation, the vision aid 2 is of shutter type, i.e. the left liquid crystal shutter 21L and the right liquid crystal shutter 21R are alternately opened and closed concurrently with switching of images displayed on the display unit 11, but the vision aid is not limited thereto. For example, the vision aid 2 may be of anaglyph type, i.e. use glasses with filters of two different colors (red and blue, for example). Alternatively, the image display device 1 may display left and right images in different polarization states and the vision aid 2 may be glasses with polarizing filters to separate those images from each other.

Although not shown, the frame 20 incorporates an electronic circuit, a battery and other components. The left liquid crystal shutter 21L fits into the left eye portion of the frame 20. The right liquid crystal shutter 21R fits into the right eye portion of the frame 20. The left liquid crystal shutter 21L and the right liquid crystal shutter 21R may be opened and closed independently. Details thereof will be described later.

In the present implementation, the mounting detector 22 is provided on a temple of the frame 20 and is implemented as a push switch. The mounting detector 22 detects that the vision aid 2 is in contact with the head of the user. Specifically, in the present embodiment, when the user wears the glasses-like vision aid 2, the push switch of the mounting detector 22 provided on a temple comes in contact with the head of the user and is pressed in. When the push switch of the mounting detector 22 is pushed in, the vision aid 2 outputs, from the transmitter 24, a mounting signal 241 that indicates that the vision aid 2 is in contact with the head of the user. It should be noted that the location of a mounting detector 22 is not limited to this specific example. For example, a mounting detector 22 may be provided on a pad arm. More specifically, a push switch may be provided on a pad arm and, when the nose of the user comes in contact with the pad arm and the push switch is pressed in, a mounting signal 241 may be output. In this arrangement, too, it can be easily detected that the vision aid 2 is mounted on the user.

The transmitter 24 may be provided in any location on the vision aid 2 where it can transmit a mounting signal 241 to the mounting signal receiver 12 of the image display device 1. In the present implementation, the transmitter 24 is located on the bridge of the frame 20.

The control signal receiver 23 receives a control signal 131 sent from the shutter controller 13. The control signal receiver 23 may be provided in any location on the vision aid 2 where it can receive a control signal 131 sent from the shutter controller 13 of the image display device 1. In the present implementation, the control signal receiver 23 is provided on the bridge of the frame 20.

It should be noted that any communication method may be employed between the shutter controller 13 of the image display device 1 and the control signal receiver 23 of the vision aid 2 and between the transmitter 24 of the vision aid 2 and the mounting signal receiver 12 of the image display device 1. Although FIG. 1 illustrates that the image display device 1 communicates with the vision aid 2 wirelessly, communication may also be established via a cable. If wireless communication is employed, any wireless communication such as infrared communication or Bluetooth® may be used.

### Functional Configuration of Image Display Device

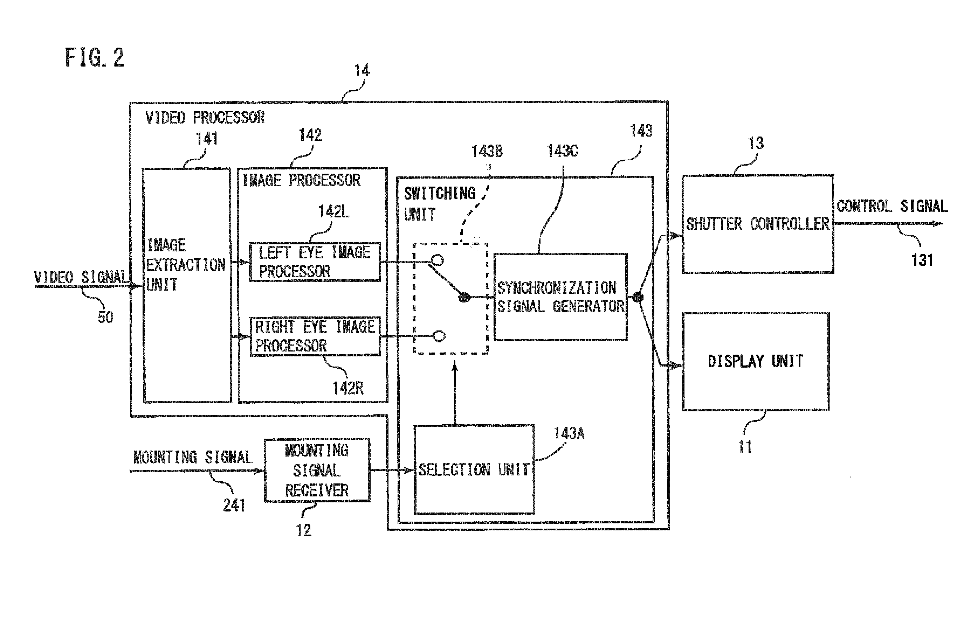

As shown in FIG. 2, the image display device 1 includes the display unit 11, the mounting signal receiver 12 and the shutter controller 13, as well as a video processor 14. The video processor 14 includes an image extraction unit 141, an image processor 142 and a switching unit 143.

The image extraction unit 141 receives a video signal 50. The video signal 50 is transmitted from the outside in compliance with a predetermined transmission format for stereo images. The transmission format is defined by an interface standard such as High-Definition Multimedia Interface (HDMI). For example, HDMI1.4 defines the following three transmission formats for video signals 50:

(1) a format for alternately transmitting a component of a left eye image and a component of a right eye image for each predetermined period of time or each predetermined line;
(2) a format for transmitting an image of one frame, in which a left eye image is disposed on the left half in the horizontal direction and a right eye image on the right half in the horizontal direction; and
(3) a format for transmitting a two-dimensional video signal together with distance information (for a distance in the depth direction).

A left eye image is an image viewed by the left eye of the user if the user sees an object. The right eye image is an image viewed by the right eye of the user if the user sees an object.

The image extraction unit 141 extracts a left eye image and a right eye image from a video signal 50 in accordance with the transmission format for the transmitted video signal 50. For example, if the video signal 50 complies with format (1) above, the image extraction unit 141 sorts image components into left eye imagery and right eye imagery, one for each frame or line or each field. If the video signal 50 complies with transmission format (2) above, the image extraction unit 141 cuts out the left half in the horizontal direction from an image of one frame to make a left eye image, and cuts out the right half to make a right eye image. If the video signal 50 complies with transmission format (3) above, the image extraction unit 141 generates a left eye image and a right eye image based on the distance information of the pixels. The image extraction unit 141 outputs the extracted left eye image to a left eye image processor 142L. The image extraction unit 141 outputs the extracted right eye image to a right eye image processor 142R.

The interface for a video signal 50 is not limited to HDMI and may be any other interface. A video signal 50 may be a pure two-dimensional video signal, in which case the image extraction unit 141 may add appropriate distance information to each pixel in accordance with a predetermined algorithm to generate a left eye image and a right eye image from the video signal 50.

The image processor 142 includes a left eye image processor 142L and a right eye image processor 142R. The left eye image processor 142L generates left eye image data based on the left eye image from the image extraction unit 141. The right eye image processor 142R generates right eye image data based on the right eye image from the image extraction unit 141.

The switching unit 143 includes a selection unit 143A, a switch 143B and a synchronization signal generator 143C. The selection unit 143A switches the switch 143B based on a mounting signal 241 received at the mounting signal receiver 12. Based on a mode switch signal provided from the selection unit 143A, the switch 143B selectively connects the left eye image processor 142L or the right eye image processor 142R to the synchronization signal generator 143C. If the switch 143B is connected to the left eye image processor 142L, the left eye image processor 142L outputs left eye image data to the synchronization signal generator 143C. If the switch 143B is connected to the right eye image processor 142R, the right eye image processor 142R outputs right eye image data to the synchronization signal generator 143C.

The synchronization signal generator 143C outputs the left eye image data and right eye image data to the display unit 11. The synchronization signal generator 143C outputs, to the shutter controller 13, a synchronization signal synchronized with the switching of left eye and right eye images to be displayed based on left eye and right eye image data output to the display unit 11.

Based on the synchronization signal from the synchronization signal generator 143C, the shutter controller 13 generates a control signal 131 for controlling the opening and closing of the left liquid crystal shutter 21L and the right liquid crystal shutter 21R. The control signal 131 may be synchronized with the switching of left eye and right eye images displayed on the display unit 11, and may be a signal of any waveform that enables it to be determined whether a left eye image or right eye image is to be displayed. The shutter controller 13 transmits the generated control signal 131 to the control signal receiver 23 of the vision aid 2.

Based on the left eye image data or right eye image data output from the synchronization signal generator 143C, the display unit 11 displays a left eye image or a right eye image.

### Functional Configuration of Vision Aid

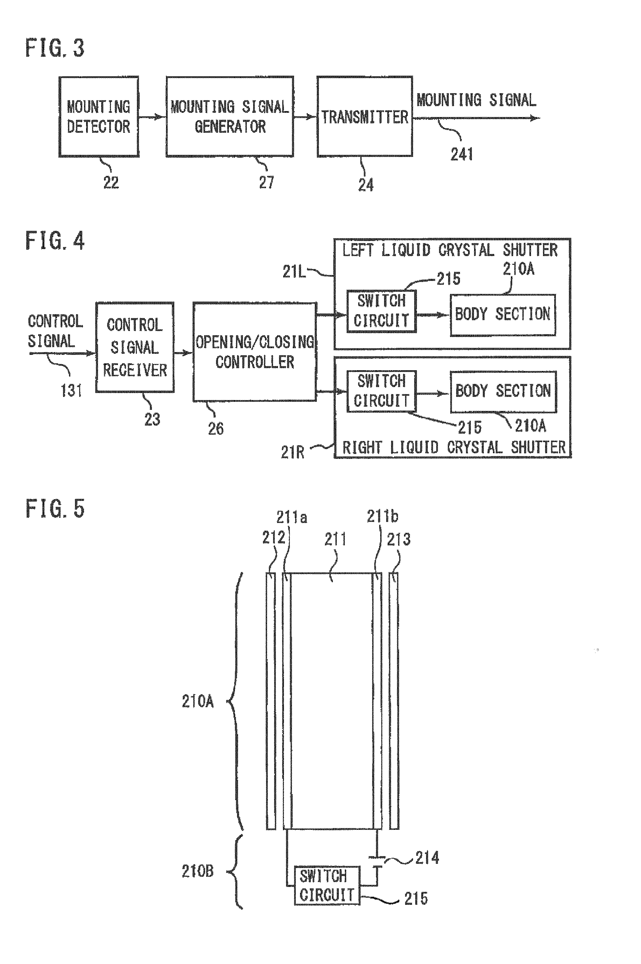

As shown in FIG. 3, the vision aid 2 includes the mounting detector 22 and the transmitter 24, as well as a mounting signal generator 27. The mounting signal generator 27 generates a mounting signal 241 indicating that the vision aid 2 is in contact with the head of the user when the push switch of the mounting detector 22 is in contact with the head of the user and is pressed in. The mounting signal generator 27 outputs the generated mounting signal 241 to the transmitter 24. The transmitter 24 wirelessly transmits the mounting signal 241 to the outside. Thus, it is possible to determine that the vision aid 2 is mounted on the user when a mounting signal 241 is transmitted from the transmitter 24.

Further, as shown in FIG. 4, the vision aid 2 includes the control signal receiver 23, the left liquid crystal shutter 21L and the right liquid crystal shutter 21R, as well as an opening/closing controller 26. In the present implementation, the opening/closing controller 26 is provided in the frame 20. The opening/closing controller 26 controls the opening and closing of the left liquid crystal shutter 21L and the right liquid crystal shutter 21R in accordance with a control signal 131 received at the control signal receiver 23.

### Configuration of Liquid Crystal Shutter

Next, the configuration of the left liquid crystal shutter 21L and the right liquid crystal shutter 21R will be described. The left liquid crystal shutter 21L and the right liquid crystal shutter 21R have the same configuration; in the present implementation, the configuration of the left liquid crystal shutter 21L will be described.

Referring to FIG. 5, the left liquid crystal shutter 2 1L includes a body section 210A and a circuit section 210B. The body section 210A includes a liquid crystal cell 211, polarizers 212 and 213, and electrode substrates 211a and 211b. It should be noted that FIG. 5 does not exactly represent the size ratios of the components.

In the present implementation, the liquid crystal cell 211 employs twist nematic (TN) liquid crystal; however, the liquid crystal mode of the liquid crystal cell 211 is not limited thereto and may be any liquid crystal mode. The liquid crystal cell 211 is provided between a pair of electrode substrates 211a and 211b. The liquid crystal cell 211 encloses liquid crystal.

Polarizers 212 and 213 are linear polarizers and, in the present implementation, are disposed in such a way that their polarizing axes are parallel to each other. The polarizers 212 and 213 are placed on the front and back surfaces, respectively, of the liquid crystal cell 211. The circuit section 210B includes a power source (battery) 214 and a switch circuit 215. The power source 214 may be incorporated in the frame 20 of the vision aid 2, for example. The power source 214 applies a voltage to the electrode substrates 211a and 211b.

### Method of Opening and Closing Liquid Crystal Shutters

Next, a method of opening and closing the left liquid crystal shutter 21L and the right liquid crystal shutter 21R will be described. The left liquid crystal shutter 21L and the right liquid crystal shutter 21R operate in the same manner. Thus, in the present implementation, operations of the left liquid crystal shutter 21L will be described.

Referring to FIG. 5, when the switch in the switch circuit 215 is open (i.e. no voltage is applied to the liquid crystal cell 211), linearly polarized light that has passed through the front polarizer 212 (i.e. the one through which light from the image display device 1 enters the shutter) is rotated along the twist of liquid crystal molecules in the liquid crystal cell 211 while passing through the liquid crystal cell 211. Accordingly, when no voltage is applied to the liquid crystal cell 211, light that passes through the liquid crystal cell 211 does not pass through the polarizer 213. Thus, when no voltage is applied to the liquid crystal cell 211, the left liquid crystal shutter 21L blocks light from the image display device 1.

On the other hand, when the switch in the switch circuit 215 is closed and voltage is applied to the liquid crystal cell 211, liquid crystal molecules in the liquid crystal cell 211 move such that the long axes of the molecules are perpendicular to the substrate surface of the liquid crystal cell 211. Thus, light passes through the liquid crystal cell 211 without being affected by liquid crystal molecules in the liquid crystal cell 211, and then passes through the polarizer 213. Thus, when voltage is applied to the liquid crystal cell 211, the liquid crystal shutter 21L passes light from the image display device 1.

In the shutter glasses 2, in response to a control signal from the shutter controller 13 of the image display device 1, the switch of the switch circuit 215 is opened and closed to separately turn on and off voltage application to the liquid crystal cell 211 of each of the liquid crystal shutters 21L and 21R, thereby independently open and close each of the liquid crystal shutters 21L and 21R for light from the image display device 1. As such, in the implementation described here, each of the liquid crystal shutters 21L and 21R blocks light from the image display device 1 (i.e. "the shutter is closed") as voltage application to the liquid crystal cell 211 is turned off, and passes light from the image display device 1 (i.e. "the shutter is open") as voltage application is turned on.

Although in this implementation, the polarizers 212 and 213 have their polarizing axes parallel to each other, the polarizers may also have their polarizing axes perpendicular to each other. In this case, the relationships between on/off of voltage application to the liquid crystal cell 211 and passing/blocking of light by the liquid crystal shutters 21L and 21R are reversed from those described above.

Further, if the image display device 1 uses a liquid crystal display panel, the one of the polarizers on the liquid crystal shutters 21L and 21R facing the image display device may be omitted and a polarizer may only be provided on the viewer's side of each of the liquid crystal shutters 21L and 21R.

### Operations of Stereo Image Display System

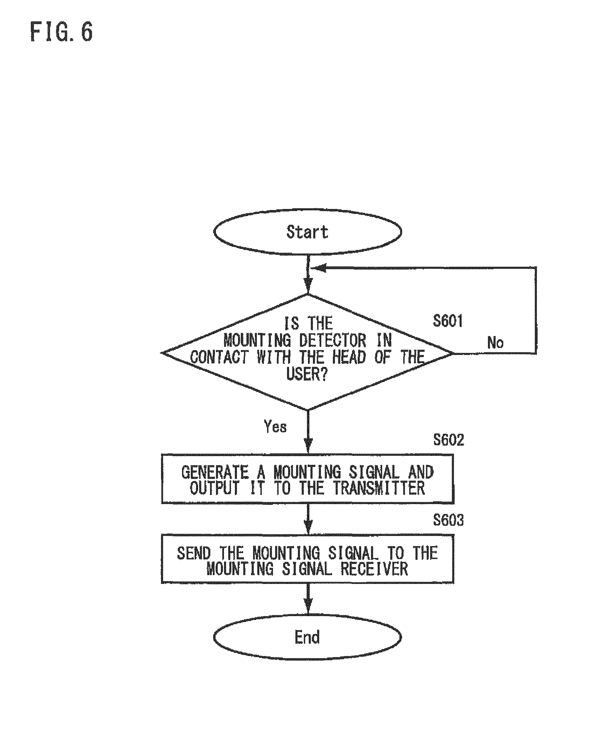

Next, operations of the stereo image display system will be described with reference to FIGS. 6 to 8.

FIG. 6 is a flow chart illustrating operations of the vision aid 2. When the push switch of the mounting detector 22 is in contact with the head of the user and is pressed in (Yes at step S601), the mounting signal generator 27 generates a mounting signal 241 and outputs it to the transmitter 24 (step S602). The transmitter 24 transmits the mounting signal 241 from the mounting signal generator 27 to the mounting signal receiver 12 of the image display device 1 (step S603).

The vision aid 2 repeats the process of steps S601 to S603 at regular time intervals.

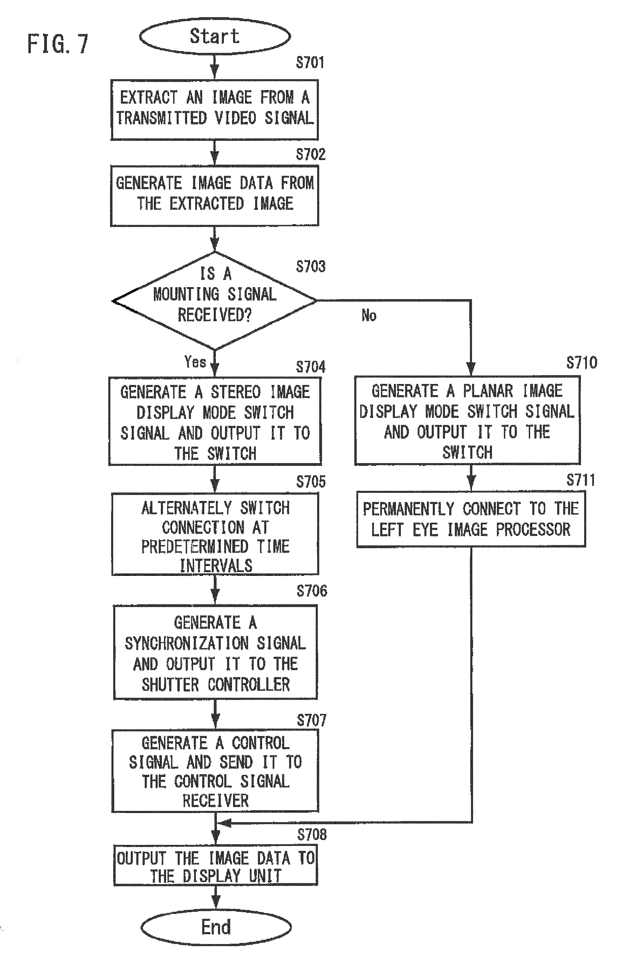

FIG. 7 is a flow chart illustrating operations of the image display device 1. In response to a video signal 50 transmitted from the outside, the image display device 1 operates in the following manner.

The image extraction unit 141 extracts a left eye image and a right eye image from the transmitted video signal 50 (step S701). The image processor 142 uses the extracted images to generate image data for display on the display unit 11 (step S702). Specifically, the left eye image processor 142L of the image processor 142 uses the extracted left eye image to generate left eye image data. The right eye image processor 142R of the image processor 142 uses the extracted right eye image to generate right eye image data. The generated left eye image data and right eye image data are temporarily held in the left eye image processor 142L and the right eye image processor 142R, respectively.

Next, it is determined whether the mounting signal receiver 12 has received a mounting signal 241 (step S703). If the mounting signal receiver 12 has received a mounting signal 241 (Yes at step S703), the selection unit 143A generates a stereo image display mode switch signal based on the mounting signal 241 and outputs it to the switch 143B (step S704).

The switch 143B is alternately connected to the left eye image processor 142L and the right eye image processor 142R based on the stereo image display mode switch signal (step S705). More specifically, the switch 143B is switched about 60 times a second. As the switch 143B is alternately connected to the left eye image processor 142L and the right eye image processor 142R, left eye image data and right eye image data held in the left eye image processor 142L and the right eye image processor 142R, respectively, are alternately output to the synchronization signal generator 143C.

The synchronization signal generator 143C generates a synchronization signal and outputs it to the shutter controller 13 (step S706). Specifically, the synchronization signal generator 143C generates a synchronization signal that synchronizes with the display of left eye and right eye images on the display unit 11 and outputs it to the shutter controller 13. The shutter controller 13 generates a control signal based on the synchronization signal from the synchronization signal generator 143C and sends it to the control signal receiver 23 of the vision aid 2 (step S707). The synchronization signal generator 143C also outputs the left eye and right eye image data obtained at step S705 to the display unit 11 (step S708).

Using this procedure, when the mounting signal receiver 12 has received a mounting signal 241 from the vision aid 2 (i.e. the mounting detector 22 is in contact with the head of the user), a stereo image display mode switch signal is generated by the selection unit 143A and output to the switch 143B. Thus, the display unit 11 alternately displays a left eye image and a right eye image based on left eye image data and right eye image data, respectively. As such, the user only has to wear the vision aid 2 to cause the display mode of the display unit 11 to be switched to the stereo image display mode for alternately displaying a left eye image and a right eye image, without the need for the user to perform a switching operation.

At step S703, if the mounting signal receiver 12 has not received a mounting signal 241 (No at step S703), the selection unit 143A generates a planar image display mode switch signal and outputs it to the switch 143B (step S710).

As the planar image display mode switch signal is output from the selection unit 143A, the switch 143B is only connected to the left eye image processor 142L (step S711). Accordingly, the display unit 11 only displays a left eye image. As a result, the display unit 11 of the image display device 1 only displays left eye images, which are based on left eye image data.

That is, if the user takes off a vision aid 2 (i.e. the mounting detector 22 is not in contact with the head of the user any more), no mounting signal 241 is output from this vision aid 2, and thus a planar image display mode switch signal is generated by the selection unit 143A. Thus, the display unit 11 only displays a left eye image. Accordingly, when the user takes off the vision aid 2, the display mode of the display unit 11 is switched to the planar image display mode for displaying a planar image without a parallax (only a left eye image), without the need for the user to perform a switching operation.

The image display device 1 repeats the process of steps S701 to S711.

Thus, when the image display device 1 receives, from the vision aid 2, a mounting signal 241 that indicates that the vision aid 2 is in contact with the head of the user, the image display device 1 switches the display mode of the display unit 11 to the stereo image display mode in response to the mounting signal 241 received by the mounting signal receiver 12. When the image display device 1 has received no mounting signal 241 from the vision aid 2, it switches the display mode of the display unit 11 to the planar image display mode. Accordingly, the image display device 1 automatically determines whether the user wears the vision aid 2 and switches the display mode of the display unit 11 accordingly.

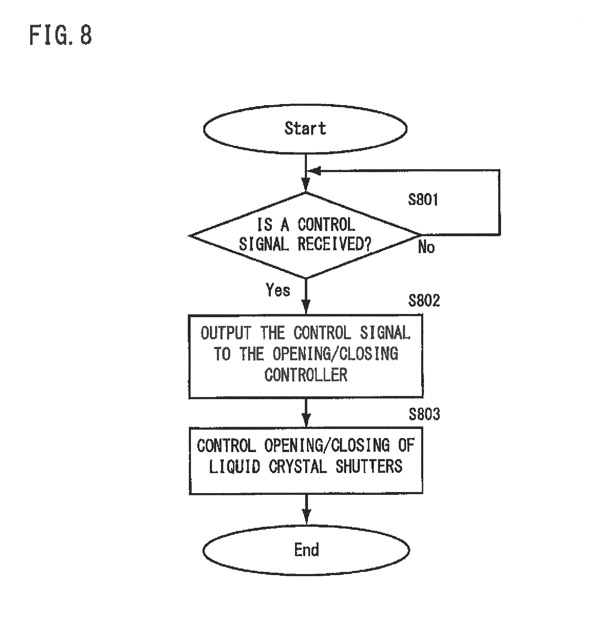

Next, referring to FIG. 8, the opening and closing of the left liquid crystal shutter 21L and the right liquid crystal shutter 21R of the vision aid 2 will be described. FIG. 8 is a flow chart illustrating operations of the vision aid 2.

As the control signal receiver 23 receives a control signal 131 from the shutter controller 13 of the image display device 1 (Yes at step S801), the following process is initiated. The control signal receiver 23 outputs the control signal 131 to the opening/closing controller 26 (step S802). The opening/closing controller 26 controls the opening and closing of the switch circuit 215 of the left liquid crystal shutter 21L and the switch circuit 215 of the right liquid crystal shutter 21R in response to the control signal 131 (step S803). Specifically, the opening/closing controller 26 determines whether the image to be displayed on the display unit 11 of the image display device 1 is a left eye image or a right eye image. When the display unit 11 is going to display a left eye image, the opening/closing controller 26 outputs the control signal 131 to the switch circuit 215 of the left liquid crystal shutter 21L to close the switch circuit 215 of the left liquid crystal shutter 21L. Thus, the left liquid crystal shutter 21L passes light from the image display device 1. On the contrary, the opening/closing controller 26 does not output the control signal 131 to the switch circuit 215 of the right liquid crystal shutter 21R, and thus the switch circuit 215 of the right liquid crystal shutter 21R remains open. Thus, the right liquid crystal shutter 21R blocks light from the image display device 1.

On the other hand, when the display unit 11 is going to display a right eye image, the opening/closing controller 26 outputs a control signal 131 to the switch circuit 215 of the right liquid crystal shutter 21R to close the switch circuit 215 of the right liquid crystal shutter 21R. Thus, the right liquid crystal shutter 21R passes light from the image display device 1. On the contrary, the opening/closing controller 26 does not output the control signal 131 to the switch circuit 215 of the left liquid crystal shutter 21L, and thus the switch circuit 215 of the liquid crystal shutter 21L remains open. Thus, the left liquid crystal shutter 21L blocks light from the image display device 1.

Using this process, the vision aid 2 allows only the left eye to view a left eye image and only the right eye to view a right eye image displayed on the display unit 11. Since the left and right eye images displayed on the display unit 11 have a parallax, the user recognizes the images displayed on the display unit 11 as a stereo image when wearing the vision aid 2.

Since the switch 143B of the image display device 1 switches connection of the left eye image processor 142L and the right eye image processor 142R about 60 times a second, the display unit 11 of the image display device 1 alternately displays a total of about 60 left and right eye images a second. Since the vision aid 2 receives a control signal 131 from the image display device 1, each of the switch circuit 215 of the left liquid crystal shutter 21L and the switch circuit 215 of the right liquid crystal shutter 21R opens and closes at a corresponding rate (i.e. about a total of 60 times a second). Accordingly, due to persistence of vision, the user can view a stereoscopic image that allows the user to feel as if he were looking at an object with both eyes.

Thus, according to the first embodiment, a stereo image display system includes a vision aid 2 and an image display device 1. A mounting detector 22 detects that the vision aid 2 is in contact with the head of the user and, if the mounting detector 22 is in contact with the head of the user, transmits, to the image display device 1, a mounting signal 241 that indicates that the vision aid 2 is in contact with the head of the user. When the mounting signal receiver 12 receives the mounting signal 241, the display mode of the display unit 11 is switched to the stereo image display mode. When the receiver has received no mounting signal 241, the display mode is switched to the planar image display mode. Thus, the stereo image display system according to the first embodiment may select a stereo image or a planar image to be viewed by the user depending on whether the vision aid 2 is in contact with the head of the user.

### Variations of First Embodiment

In the first embodiment, the mounting detector 22 implemented as a push switch that can be pressed in when it comes in contact with the head of the user has been described; however, the following variations are also possible. That is, the mounting detector 22 may be of any configuration that allows it to detect that it is in contact with, or close to, a portion of the user's body. For example, the mounting detector 22 may be implemented as a touch sensor, a pressure sensor, a slide switch, a human-sensitive sensor or the like.

Touch sensors include, for example, capacitive or resistive touch sensors. Alternatively, a photosensitive touch sensor may be used.

A slide switch may be employed, for example, in a goggle-type vision aid 2 that can be mounted on the head of the user by means of an elasticized band. That is, the band is stretched when the user wears the vision aid 2 on his head. As such, a slide switch may be provided on the band and, when the vision aid is mounted and the switch is slid, generate a mounting signal 241. Using this mechanism, the user only has to wear the vision aid 2 to cause a mounting signal 241 to be output from the mounting detector 22.

Human-sensitive sensors include, for example, an infrared or heat-sensitive sensor. In this case, a human-sensitive sensor as a mounting detector 22 may be provided in a location on the vision aid that comes in contact with, or close to, a portion of the user's body when the user wears the vision aid. Using this configuration, the user only has to wear the vision aid 2 to cause the mounting detector 22 to output a mounting signal 241.

### Second Embodiment

### Configuration of Stereo Image Display System

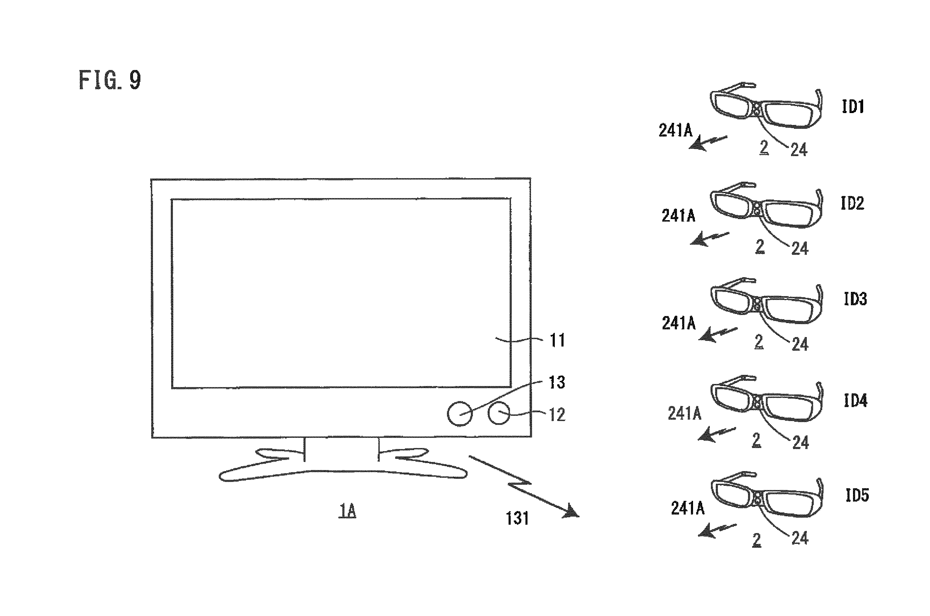

FIG. 9 illustrates a stereo image display system according to a second embodiment. The stereo image display system according to the second embodiment includes an image display device 1A and a plurality of vision aids 2.

Although five (5) vision aids 2 are provided in the implementation shown in FIG. 9, the number of vision aids 2 is not limited thereto. Each of the vision aids 2 is labeled with an identification (ID) number that identifies this particular vision aid. In the present implementation, the vision aids 2 are labeled with the ID numbers ID1 to ID5. The mounting signal generator 27 of each of the vision aids 2 in the second embodiment generates a mounting signal 241A containing the associated ID number when that particular mounting detector 22 is in contact with the head of a user. The associated transmitter 24 then sends a mounting signal 241A to the mounting signal receiver 12 of the image display device 1.

### Functional Configuration of Stereo Image Display System

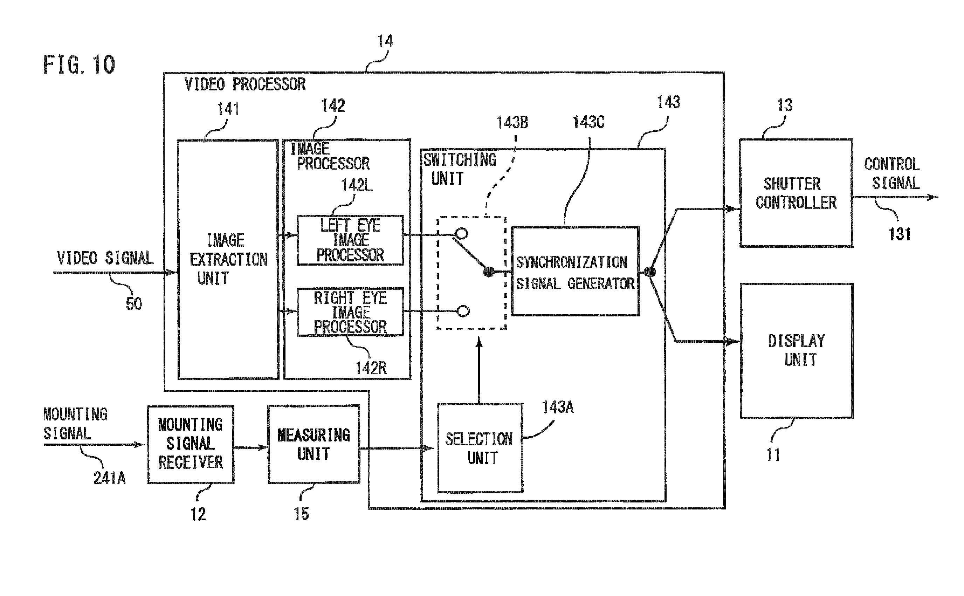

As shown in FIG. 10, the image display device 1A according to the second embodiment is the image display device 1 according to the first embodiment plus a measuring unit 15.

In the stereo image display system according to the present embodiment, the ID numbers of the vision aids 2 used in this system are stored in the measuring unit 15 in advance. Any method may be used to store the ID numbers in the measuring unit 15. For example, the user may perform storage for the measuring unit 15 in one way or another; alternatively, any new ID number not stored in the measuring unit 15 that is contained in a mounting signal 241A may be unconditionally stored in the measuring unit 15.

Based on the reception condition of a mounting signal(s) 241A from one or more vision aids 2 included in the stereo image display system, the measuring unit 15 determines the number of those of the vision aids 2 that are considered to be mounted on the head of a user. For example, in the implementation of FIG. 9, if the mounting signal receiver 12 only receives a mounting signal 241A containing the ID number ID1, the measuring unit determines that the number of vision aids 2 mounted on the head of a user is one (1), When, for example, the mounting signal receiver 12 receives a mounting signal 241A containing ID1 and a mounting signal 241A containing ID3, the measuring unit determines that the number of vision aids 2 mounted on the head of a user is two (2). The measuring unit 15 outputs the number of vision aids 2 considered to be mounted to the selection unit 143A.

Based on the number of vision aids 2 mounted, the selection unit 143A generates a stereo image display mode switch signal or a planar image display mode switch signal and outputs it to the switch 143B.

### Operations of Stereo Image Display System

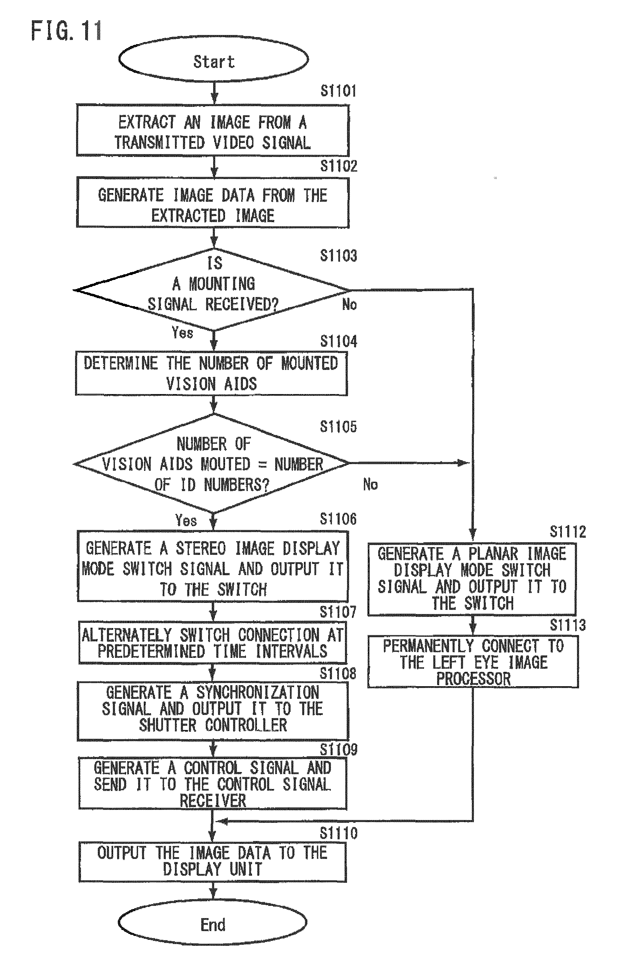

Referring to FIG. 11, operations of the stereo image display system according to the second embodiment will be described. The operation flow of the vision aids 2 is the same as that of FIG. 6 used to describe the first embodiment.

The image display device 1A performs the operations of steps S1101 to S1113 once it receives a video signal 50 from the outside. Basically, the operations of steps S1101 to S1103, S1106 to S1110 and S1112 to S1113 correspond to those of steps S701 to S703, S704 to S708 and S710 to S711. The differences from the first embodiment will be mainly described below.

When the mounting signal receiver 12 receives a mounting signal 241A (Yes at step S1103), the measuring unit 15 receives the mounting signal 241A from the mounting signal receiver 12 and determines the number of vision aids 2 mounted on a user (step S1104). At this point, the measuring unit 15 determines the number of vision aids 2 mounted on a user based on the ID number(s) contained in the mounting signal 241A. Specifically, the measuring unit 15 reads the ID number(s) contained in the mounting signal 241A and identifies one or more vision aids 2 mounted on one or more users. The measuring unit 15 repeats these specific operations each time it receives a mounting signal 241A to determine the number of vision aids 2 mounted on a user.

Next, the measuring unit 15 determines whether the number determined at step S1104 is equal to the number of ID numbers that were stored in the measuring unit 15 in advance (step S1105). If Yes at step S1105, it means that all the vision aids 2 are mounted on users. In this case, the process beginning at step S1106 is performed and the display unit 11 performs display in the stereo image display mode.

If, on the other hand, the number determined at step S1104 is not equal to the number of ID numbers stored in the measuring unit 15 in advance (No at step S1105), it means that at least one of the vision aids 2 is not mounted on a user. In this case, the process proceeds to step S1112 (similar to step S710) and the display unit 11 performs display in the planar image display mode.

According to the second embodiment, the image display device 1 causes the display unit 11 to perform display in the stereo image display mode when all the vision aids 2 are mounted on users (Yes at step S1105), and otherwise in the planar image display mode.

This embodiment provides the following advantages: when it is determined that all the vision aids 2 are mounted, the display mode of the display unit 11 will be the stereo image display mode. Each of the vision aids 2 repeats the operations of steps S601 to S603 shown in FIG. 6 at regular time intervals. Accordingly, as long as each vision aid 2 is mounted on the head of a user and the associated mounting detector 22 is in contact with the head of the user (Yes at step S703), the image display device 1 receives a mounting signal 241A from that particular vision aid 2 at regular time intervals. When any one of the vision aids 2 is taken off the head of its user, the image display device 1 ceases to receive a mounting signal 241A from that vision aid 2. Accordingly, the number of vision aids 2 mounted on a user, determined by the measuring unit 15 at step S1104, is reduced by one (1). In this case, the image display device 1 switches the display mode of the display unit 11 to the planar image display mode. This will prevent a situation in which a user, having taken off his vision aid 2, views an image composed of left and right eye images superimposed on one another with a parallax.

### Variation of Second Embodiment

The above description of the second embodiment has illustrated an implementation where the display mode is switched to the stereo image display mode if Yes at step S1105. However, in a variation thereof, instead of step S1105, it may be determined whether the number of vision aids 2 considered to be mounted on the head of a user is at least one and, if Yes, the process proceeds to step S1106 or, if No, the process proceeds to step S1112.

Alternatively, one of the vision aids 2 may be designated as a representative vision aid (hereinafter referred to as "parent"), and the display mode of the display unit 11 may be switched to the stereo image display mode if it is determined that the parent is mounted on the head of a user and may be switched to the planar image display mode if it is determined that the parent is not mounted on the head of a user.

Further, although the second embodiment has illustrated an implementation where a mounting signal 241A contains the ID number of a vision aid 2, such is not a requirement. For example, the measuring unit 15 may measure the number of times the mounting signal receiver 12 received a mounting signal 241A in a predetermined period of time and then use this number as the number of vision aids 2 mounted on the head of a user.

Furthermore, storing the ID numbers of the vision aids 2 in the measuring unit 15 in advance and comparing the number of vision aids 2 considered to be mounted on a user with the number of the stored ID numbers is not a requirement, either. For example, the measuring unit 15 may measure the number of times the mounting signal receiver 12 received a mounting signal 241A in a predetermined period of time and then simply compare this number with a predetermined threshold before switching the display mode of the display unit 11 to the stereo image display mode or the planar image display mode.

The specific embodiments above are merely examples used to carry out the present invention. Thus, the present invention is not limited to the embodiments above and the embodiments may be modified without departing from the spirit of the invention.

## Claims

1. An image display device comprising:
a display unit that performs display in a stereo image display mode for displaying, separately in time or space, a left eye image to be viewed through a left eye portion of a vision aid and a right eye image to be viewed through a right eye portion of the vision aid, or a planar image display mode for displaying one of the left eye image and the right eye image;
a mounting signal receiver that receives, from the vision aid, a mounting signal that indicates that the vision aid is in contact with or close to a portion of a user's body; and
a switching unit that switches a display mode of the display unit between the stereo image display mode and the planar image display mode based on a reception condition of the mounting signal at the mounting signal receiver.

2. The image display device according to claim 1, further comprising a measuring unit that determines, if the mounting signal receiver receives a mounting signal from a plurality of vision aids, a mounting condition of each of the plurality of vision aids at a user based on the received mounting signal,
wherein the switching unit switches the display mode of the display unit between the stereo image display mode and the planar image display mode based on the mounting condition determined by the measuring unit.

3. The image display device according to claim 2,
wherein the measuring unit stores a number of the plurality of vision aids in advance, and
wherein the measuring unit determines, as the mounting condition, a number of vision aids considered to be mounted on a user out of the plurality of vision aids, and
the switching unit switches the display mode of the display unit to the stereo image display mode if the number determined by the measuring unit is identical with the number stored at the measuring unit.

4. The image display device according to claim 2,
wherein the measuring unit determines, as the mounting condition, a number of vision aids considered to be mounted on a user out of the plurality of vision aids, and
the switching unit switches the display mode of the display unit to the stereo image display mode if the number determined by the measuring unit is not less than 1.

5. A stereo image display system comprising:
a vision aid that allows a left eye image to be viewed through a left eye portion and a right eye image to be viewed through a right eye portion independently from each other; and
an image display device that performs display in a stereo image display mode for displaying, separately in time or space, the left eye image and the right eye image, or a planar image display mode for displaying one of the left eye image and the right eye image,
wherein the vision aid includes:
a mounting detector that determines that the vision aid is in contact with or close to a portion of a user's body;
a mounting signal generator that generates, based on the determination by the mounting detector, a mounting signal that indicates that the vision aid is in contact with or close to a portion of the user's body; and
a transmitter that transmits the mounting signal to the image display device, and
wherein the image display device includes:
a display unit that performs display in one of the stereo image display mode and the planar image display mode;
a mounting signal receiver that receives the mounting signal from the transmitter; and
a switching unit that switches a display mode of the display unit between the stereo image display mode and the planar image display mode based on a reception condition of the mounting signal at the mounting signal receiver.

6. The stereo image display system according to claim 5, comprising a plurality of vision aids,
wherein the image display device further includes a measuring unit that determines, if the mounting signal receiver receives a mounting signal from the plurality of vision aids, a mounting condition at a user of the plurality of vision aids based on the received mounting signal, and
the switching unit switches the display mode of the display unit between the stereo image display mode and the planar image display mode based on the mounting condition determined by the measuring unit.

7. The stereo image display system according to claim 6,
wherein the measuring unit stores a number of the plurality of vision aids in advance, and
the measuring unit determines, as the mounting condition, a number of vision aids considered to be mounted on a user out of the plurality of vision aids, and
the switching unit switches the display mode of the display unit to the stereo image display mode if the number determined by the measuring unit is equal to the number stored by the measuring unit.

8. The stereo image display system according to claim 6,
wherein the measuring unit determines, as the mounting condition, a number of vision aids considered to be mounted on a user out of the plurality of vision aids, and
the switching unit switches the display mode of the display unit to the stereo image display mode if the number determined by the measuring unit is not less than 1.

9. The stereo image display system according to any one of claims 5 to 8, wherein the mounting detector is a push switch.

10. A vision aid that allows a left eye image to be viewed through a left eye portion and a right eye image to be viewed through a right eye portion independently from each other, comprising:
a mounting detector that determines that the vision aid is in contact with or close to a portion of a user's body;
a mounting signal generator that generates a mounting signal that indicates that the vision aid is in contact with or close to a portion of the user's body in accordance with the determination by the mounting detector; and
a transmitter that transmits the mounting signal to an image display device that performs display in one of a stereo image display mode and a planar image display mode, the stereo image display mode being for displaying, separately in time or space, the left eye image to be viewed through the left eye portion of the vision aid and the right eye image to be viewed through the right eye portion of the vision aid, and the planar image display mode being for displaying one of the left eye image and the right eye image.

11. The vision aid according to claim 10, wherein the mounting detector is a push switch.
